# EUROPÄISCHE PATENTANMELDUNG

(11) **EP 4 421 345 A2**
(43) Veröffentlichungstag der Anmeldung: **28.08.2024**
(21) Anmeldenummer: 24187023.7
(22) Anmeldetag: 05.07.2018
(51) Int. Cl.: F16D 121/08

(54) **SCHEIBENBREMSE MIT DARIN ANGEORDNETER ZUSPANNVORRICHTUNG SOWIE STÜTZROLLE FÜR DIE ZUSPANNVORRICHTUNG**

(30) Priorität: 18.07.2017 DE 102017116112
(62) Teilanmeldung aus: 18742699.4
(71) Anmelder: BPW Bergische Achsen Kommanditgesellschaft, 51674 Wiehl (DE)
(72) Erfinder: KLAAS, Thomas, 51580 Reichshof (DE); PEHLE, Michael, 51674 Wiehl (DE)
(74) Vertreter: DREISS Patentanwälte PartG mbB

(57) **Zusammenfassung**

Vorgeschlagen wird eine Scheibenbremse mit einem Bremssattel (1) und einer darin angeordneten Zuspannvorrichtung für die Kraftbeaufschlagung der Bremsbeläge der Scheibenbremse, wobei Bestandteil der Zuspannvorrichtung ein durch ein Kraftglied und vorzugsweise einen Druckluftzylinder betätigbarer Bremshebel (10) ist. Dieser setzt sich zusammen aus einem Hebelarm (14), gegen den das Kraftglied abgestützt ist, und einer Zuspannwelle (15), die einerseits gegen ein in Richtung zu den Bremsbelägen arbeitendes Druckstück (8), und die andererseits von innen gegen den Bremssattel abgestützt ist, indem der Bremssattel (1) und die Zuspannwelle (15) einander zugewandt jeweils als Schalen (21, 22) ausgebildet sind, in denen eine Stützrolle (20) mit quer zu der Zuspannrichtung (Z) verlaufender Rollenachse (A) gelagert ist. Um die gegenseitige Beweglichkeit der beteiligten Bauteile gering zu halten, und zwar durch möglichst einfache Maßnahmen und ohne die Notwendigkeit zusätzlicher Bauteile, ist die Stützrolle (20) mit ihrer Mantelfläche (20A) unmittelbar in einer der beiden Schalen (21, 22) abgestützt und in Bezug auf diese Schale drehfest oder begrenzt drehbeweglich ausgebildet. Ferner dient die Stützrolle (20) als Mittel, um den Bremshebel (10) seitlich in dem Bremssattel zu zentrieren. Ferner soll eine für diese Zwecke besonders geeignete Stützrolle geschaffen werden.

## Beschreibung

Die Erfindung betrifft eine Scheibenbremse mit einem Bremssattel und einer darin angeordneten Zuspannvorrichtung nach dem Oberbegriff des Patentanspruchs 1.

Die Erfindung betrifft ferner eine Stützrolle für die Zuspannvorrichtung einer Scheibenbremse nach dem Oberbegriff des Patentanspruchs 10.

Scheibenbremsen sind in der Regel innerhalb ihres Bremssattels mit einer Zuspannvorrichtung versehen. Diese überträgt und verstärkt gegebenenfalls die Kraft, mit der die beidseits der Bremsscheibe angeordneten Bremsbeläge in Kontakt mit der Bremsscheibe gebracht werden, um so durch Reibung die Bremswirkung zu erzielen.

Bei gattungsgemäßen Scheibenbremsen, die oft druckluftbetätigt sind, ist Bestandteil der Zuspannvorrichtung ein verschwenkbar in dem Bremssattel angeordneter Bremshebel. Der Bremshebel besteht aus einem Hebelarm sowie einer im Querschnitt wie ein Exzenter gestalteten Zuspannwelle. An dem Hebelarm stützt sich das Kraftglied der Scheibenbremse ab, z. B. der Druckluftzylinder im Fall einer druckluftbetätigten Scheibenbremse. Die Zuspannwelle des Bremshebels ist einerseits gegen ein in Richtung zu dem fahrzeuginneren Bremsbelag hin arbeitendes Druckstück abgestützt, und andererseits gegen die Rückseite des Bremssattelgehäuses. Aus der DE 195 15 063 C2 und der DE 10 2012 006 089 A1 sind Scheibenbremsen bekannt, welche die vorgenannten Merkmale aufweisen, und bei denen zur rückwärtigen, also bremssattelseitigen Abstützung des Bremshebels eine Innenfläche des Bremssattel einerseits, und die Zuspannwelle des Bremshebels andererseits einander zugewandt als Schalen ausgebildet sind. In den Schalen ist, mit quer zur Zuspannrichtung verlaufender Rollenachse, eine Stützrolle gelagert. Bei der Bauart nach der DE 195 15 063 C2 ist die Stützrolle einteilig, während bei der Bauart nach der DE 10 2012 006 089 A1 zwei getrennte Stützrollen zum Einsatz kommen, da auch die Zuspannwelle des Bremshebels zweigeteilt ist mit einem ersten Längsabschnitt und einem zweiten Längsabschnitt, zwischen denen sich ein Freiraum für die Unterbringung einer Nachstelleinrichtung befindet. Um die Stützrollen in Richtung ihrer Rollenachse gegenüber dem Bremshebel zu zentrieren, ist an dem Bremshebel ein zusätzliches, komplex gestaltetes Blechformteil befestigt. Laschen an dem Blechformteil verhindern, dass sich die Stützrollen entlang ihrer Achse relativ zu dem Bremshebel verlagern. Der Erfindung liegt die **Aufgabe** zugrunde, bei einer Scheibenbremse mit in deren Bremssattel angeordneter Zuspannvorrichtung, die unter anderem einen schwenkbaren Bremshebel aufweist, die gegenseitige Beweglichkeit der beteiligten Bauteile gering zu halten, und zwar durch möglichst einfache Maßnahmen und ohne die Notwendigkeit zusätzlicher Bauteile. Ferner soll eine für diese Zwecke besonders geeignete Stützrolle geschaffen werden.

Solche und ähnliche Scheibenbremsen bzw. Stützrollen sind beispielsweise aus der US 2003/085082 A1, EP 1 944 522 A1, DE 10 2014 113370 A1, EP 3 109 499 A1 und der KR 2013 0135203 A bekannt.

Zur Lös u n g dieser Aufgabe wird eine Scheibenbremse mit den Merkmalen des Patentanspruchs 1, sowie eine Stützrolle für die Zuspannvorrichtung einer Scheibenbremse mit den Merkmalen des Anspruchs 10 vorgeschlagen.

Durch diese Maßnahmen wird bei einer Scheibenbremse mit einer Zuspannvorrichtung, die einen schwenkbaren Hebel aufweist, erreicht, dass die gegenseitige Beweglichkeit der beteiligten Bauteile, vor allem die gegenseitige Beweglichkeit quer zur Zuspannrichtung, gering gehalten werden kann, und zwar durch einfache Maßnahmen und ohne die Notwendigkeit zusätzlicher Bauteile. Verschiedene Ausgestaltungen der erfindungsgemäßen Scheibenbremse und der erfindungsgemäßen Stützrolle sind in den Unteransprüchen angegeben. Gemäß einer Ausgestaltung der Scheibenbremse ist die Stützrolle in Bezug auf die an der Zuspannwelle ausgebildete Schale nicht drehbeweglich oder allenfalls begrenzt drehbeweglich ausgebildet. Dies wird vorzugsweise dadurch erzielt, dass die Stützrolle zum Erzielen der Drehfestigkeit bzw. der Drehbegrenzung eine Asymmetrie in Bezug auf die Rollenachse aufweist. Vorzugsweise besteht die Asymmetrie in einer sich parallel zur Rollenachse erstreckenden Einsenkung auf der im Übrigen zylindrischen Mantelfläche der Stützrolle.

Gemäß einer Ausgestaltung setzt sich die unmittelbar an der Zuspannwelle des Bremshebels ausgebildete Schale zusammen aus zwei teilkreisförmig gebogenen Segmenten von gleichem Radius und einer zwischen den Segmenten angeordneten, sich parallel zur Rollenachse erstreckenden Abflachung, wobei die Abflachung gegenüber dem Radius der Segmente nach radial innen vorsteht. Zum Beispiel kann die Abflachung als ein flacher Kanal gestaltet sein, der den Grund der Schale bildet. Ferner wird vorgeschlagen, dass die Breite der Abflachung geringer ist als die Breite der Einsenkung auf der Mantelfläche der Stützrolle, vorzugsweise 10% bis 30% geringer.

Bei der zweiten, erfindungsgemäßen Ausgestaltung der Scheibenbremse liegt die Stützrolle zu ihrer Ausrichtung in Achsrichtung mit einer ersten Fläche axial gegen den Bremssattel, und mit einer zweiten Fläche axial gegen die Zuspannwelle des Bremshebels an. Die zweite Fläche ist entgegengesetzt der ersten Fläche ausgerichtet, und vorzugsweise ist die zweite Fläche in Achsrichtung versetzt zu der ersten Fläche.

Die vorzugsweise als ein Stützrollenpaar vorhandenen Stützrollen sind daher nicht nur Abstützmittel bei der Übertragung der Bremszuspannkräfte, sondern sie sind außerdem seitliche Ausrichtmittel, welche den Bremshebel quer zu der Zuspannrichtung ausrichten und so seitlich im Bremssattelgehäuse zentrieren.

Zur gegenseitigen Ausrichtung der beteiligten Bauteile wird ferner vorgeschlagen, dass die erste Fläche eine Stirnfläche der Stützrolle ist und gegen eine innen an dem Bremssattel angeordnete Ausrichtfläche anliegt. Als vorteilhafte Ausgestaltung wird vorgeschlagen, dass sich die erste Fläche am Ende eines an der Stützrolle angeordneten Zapfens befindet, der einen geringeren Durchmesser aufweist als die Stützrolle auf ihrer in den Schalen gelagerten Mantelfläche. Vorzugsweist ist die innen an dem Bremssattel angeordnete Ausrichtfläche eine plan bearbeitete Innenfläche des Bremssattels, deren Flächennormale mit der Drehachse der Stützrolle zusammenfällt.

Vorzugsweise ist die Stützrolle mit einem Bund versehen, der sich radial über die in den Schalen gelagerte Mantelfläche der Stützrolle hinaus erstreckt, wobei sich die zweite Fläche an dem Bund befindet.

Wegen der beengten Platzverhältnisse im Inneren des Bremssattels kann es von Vorteil sein, wenn sich der Bund mit der daran ausgebildeten zweiten Fläche nur über einen Teilumfang der Mantelfläche der Stützrolle erstreckt, nämlich über jenen Teilumfang, auf dem der Bund die axiale Abstützung übernimmt. In diesem Fall ist auf dem übrigen Umfang ein Bund entweder nicht, oder nur in einer radial reduzierten Höhe vorhanden.

Ferner wird bezüglich der Stützrolle vorgeschlagen, dass deren Mantelfläche auf dem Teilumfang, über den sich der Bund erstreckt, eine Asymmetrie in Bezug auf die Rollenachse aufweist. Die Asymmetrie ist vorzugsweise eine Einsenkung auf der im Übrigen zylindrischen Mantelfläche.

Zur gegenseitigen Ausrichtung der beteiligten Bauteile wird ferner vorgeschlagen, dass die zweite Fläche gegen eine an der Zuspannwelle seitlich angeordnete Ausrichtfläche anliegt. Diese Ausrichtfläche kann die Gestalt eines plan bearbeiteten Ringsegments aufweisen. Sofern außerdem die Achse des Ringsegments mit der Rollenachse zusammenfällt, sind die betreffende Schale und das Ringsegment in einem gemeinsamen Fräs- oder Bohrprozess herstellbar.

Grundsätzlich kann die vorzugsweise aus Stahl bestehende Stützrolle eine einzige, über die Länge der Zuspannwelle des Bremshebels durchgehende Stützrolle sein. Bevorzugt wird jedoch eine Ausgestaltung unter Verwendung zweier Stützrollen. Gemäß dieser Ausgestaltung ist die bremssattelseitige Lagerung zweigeteilt mit einer ersten und einer zweiten Schale, in denen jeweils eine Stützrolle gelagert ist, wobei der Bremssattel zwischen den beiden Schalen mit einer Gehäuseöffnung versehen ist. Die Gehäuseöffnung an dieser Stelle des Bremssattels hat mehrere Vorteile. So lässt sich durch diese Gehäuseöffnung ein Werkzeug hindurchführen, mit dem bei der Herstellung des Bremssattels dessen Innenbearbeitung erfolgt. Bei betriebsfertig montierter Scheibenbremse kann die Gehäuseöffnung dazu dienen, eine dahinter angeordnete Nachstellvorrichtung der Scheibenbremse wieder zurückzustellen, z. B. nach dem Austausch und Einsetzen neuer Bremsbeläge.

Vorzugsweise sind die beiden Stützrollen an ihren einander abgewandten Enden jeweils mit einer Stirnfläche versehen, die gegen eine innen an dem Bremssattel angeordnete seitliche Ausrichtfläche anliegt.

Die Stützrollen können unmittelbar an den an der Rückseite des Bremssattels ausgebildeten Schalen abgestützt sein. Bevorzugt wird hier jedoch eine Bauart, bei der zwischen den bremssattelseitigen Schalen und den Stützrollen jeweils eine zusätzliche Lagerschale angeordnet ist. Dies hat den Vorteil, dass bei einem Verschleiß an dieser Lagerstelle nicht der Bremssattel erneuert werden muss, sondern ein Austausch der zusätzlichen Lagerschalen ausreicht.

In der Bauart mit zwei getrennten Stützrollen ist auch die Zuspannwelle des Bremshebels zweigeteilt mit einem ersten Längsabschnitt, welcher auf der einen Seite der Bewegungsebene des Hebelarms angeordnet ist, und einem zu dem ersten Längsabschnitt beabstandeten zweiten Längsabschnitt, welcher auf der anderen Seite der Bewegungsebene des Hebelarms angeordnet ist. An jedem dieser beiden Längsabschnitte ist eine Schale ausgebildet, in der dann jeweils eine Stützrolle unmittelbar, also ohne eine zusätzliche Lagerschale, abgestützt ist.

Vorteilhaft für die Ausgestaltung der Stützrolle ist, wenn diese im Anschluss an den Bund mit einem Zapfen versehen ist, der einen geringeren Durchmesser als die Mantelfläche der Stützrolle aufweist. Der Bund erstreckt sich nur über einen Teilumfang der Mantelfläche, wohingegen auf dem übrigen Umfang ein Bund nicht oder nur in einer radial reduzierten Höhe vorhanden ist. In diesem Fall weist die Mantelfläche die Asymmetrie auf jenem Teilumfang auf, über den sich der Bund erstreckt.

Weitere Vorteile und Einzelheiten ergeben sich aus der nachfolgenden Beschreibung und unter Bezugnahme auf die beigefügten Zeichnungen. Darin zeigen:
Fig. 1 in einer Seitenansicht den Bremssattel und die Bremsscheibe einer Nutzfahrzeug-Scheibenbremse; Fig. 2 einen Längsschnitt durch den in Fig. 1 mit II bezeichneten Abschnitt des Bremssattels; Fig. 3 in einer perspektivischen Ansicht eine Abstützfläche innen an der Sattelrückwand des Bremssattels;

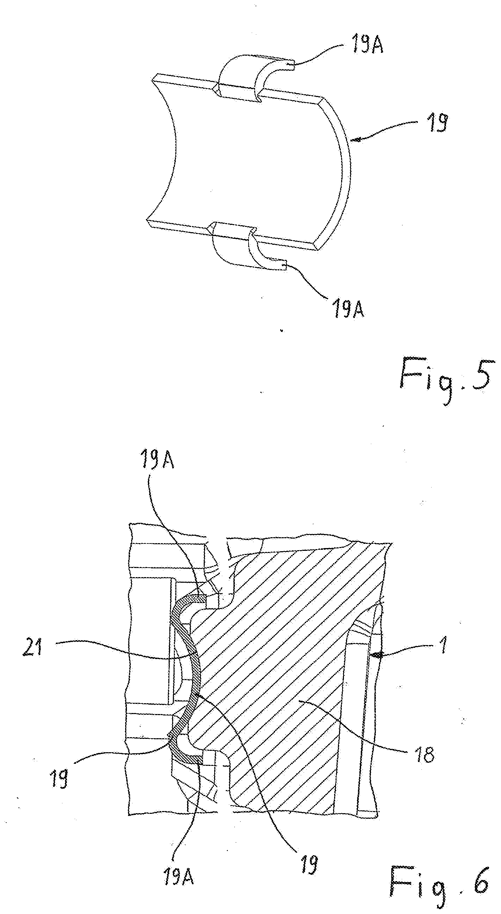

Fig. 4 die Abstützfläche einschließlich einer dort aufgesetzten Lagerschale; Fig. 5 die rinnenförmig gestaltete Lagerschale in perspektivischer Einzeldarstellung;
Fig. 6 einen weiteren Längsschnitt durch die Sattelrückwand, die Abstützfläche und die darauf gesetzte Lagerschale; Fig. 7 in einer Explosionsdarstellung den Bremssattel, zwei Stützrollen sowie einen Bremshebel der Scheibenbremse;
Fig. 8 die Gegenstände nach Fig. 7 ein leicht versetzter Perspektive; Fig. 9a einen Querschnitt durch die Stützrolle im Bereich der Anlage der Stützrolle gegen den Bremshebel, und
Fig. 9b die Gegenstände nach Fig. 9a in veränderter Drehlage der Stützrolle.

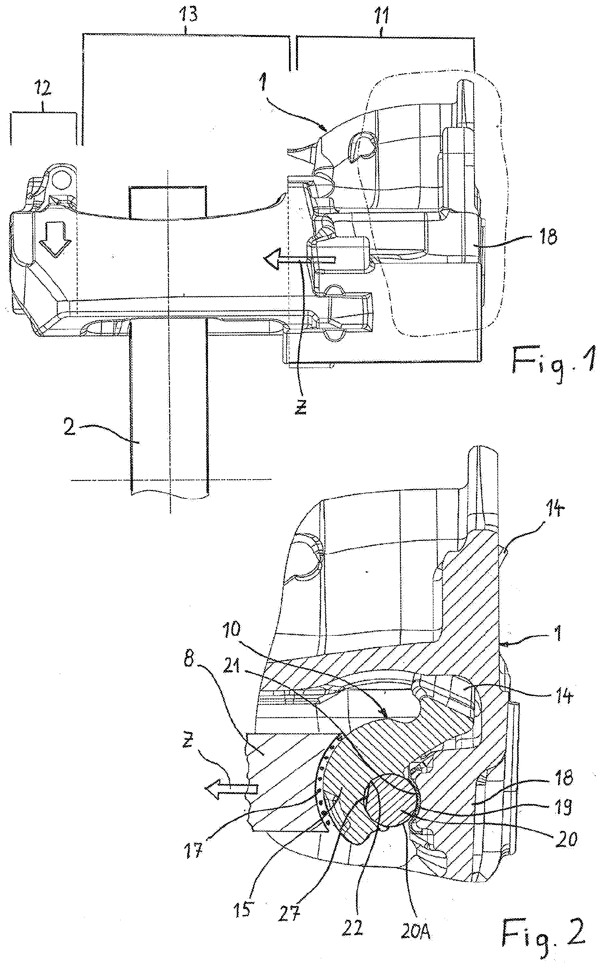

In Fig. 1 und Fig. 2 ist ein Bremssattel 1 einer Scheibenbremse wiedergegeben, wobei die Scheibenbremse hier von der Bauart einer druckluftbetätigten Nutzfahrzeugbremse des Schiebesattel- oder Schwimmsatteltyps ist. Der in einem einzigen Stück gegossene Bremssattel 1 setzt sich aus drei Abschnitten zusammen. Ein erster Sattelabschnitt 11, welcher sich bei montierter Bremse fahrzeuginnen befindet, ist in seinem Inneren mit einem Hohlraum 7 versehen, welcher Platz für eine Bremszuspannvornchtung bietet. Ein zweiter Sattelabschnitt 12, welcher sich bei montierter Bremse fahrzeugaußen befindet, ist auf der gegenüberliegenden Seite der Bremsscheibe 2 der Scheibenbremse angeordnet. Die beiden Sattelabschnitte 11, 12 sind durch einen Brückenabschnitt 13 miteinander verbunden, der die Bremsscheibe 2 überbrückt und dabei einen Freiraum für zumindest einen Teil der Bremsscheibe 2 und für die Bremsbeläge bereitstellt. Der Bremssattel 1 ist hier einstückig insoweit, als die beiden Sattelabschnitte 11, 12 und der Brückenabschnitt 13 aus einem einzigen Teil bestehen. Der erste Sattelabschnitt 11 ist zu dem Freiraum des Brückenabschnitts 13 hin offen. Diese Öffnung dient u. a. als Montageöffnung und ist so groß, dass durch sie hindurch die Zuspannvorrichtung montiert werden kann. Die Öffnung wird, nach abgeschlossener Bremsenmontage, durch einen Deckel verschlossen.

Nicht zeichnerisch wiedergegeben sind die beiden Bremsbeläge der Scheibenbremse. Ein erster Bremsbelag befindet sich in Fig. 1 rechts der Bremsscheibe 2. Dieser zuspannseitige Bremsbelag wird unmittelbar durch die in dem Hohlraum 7 des Sattelabschnitts 11 angeordnete Zuspannvorrichtung betätigt und so gegen die Bremsscheibe 2 gedrückt. Der zweite Bremsbelag ist an dem fahrzeugäußeren Sattelabschnitt 12 angeordnet, und nimmt dort eine feste Position ein. Er ist der reaktionsseitige Bremsbelag. Die Aufgabe der Zuspannvorrichtung ist die Verstärkung der durch ein Kraftglied erzeugten Bremskräfte und deren Übertragung in Zuspannrichtung Z, die sich parallel zur Drehachse der Bremsscheibe 2 erstreckt.

Bestandteile der Zuspannvorrichtung sind, unter anderem, zwei drehbar gegen eine Sattelrückwand 18 abgestützte Stützrollen 20, ein schwenkbar in dem Bremssattelgehäuse angeordneter Bremshebel 10 und ein in Richtung zu dem fahrzeuginneren, also zuspannseitigen Bremsbelag arbeitendes Druckstück 8.

Das Druckstück 8 hat die Gestalt einer sich quer zur Zuspannrichtung Z erstreckenden Traverse. Auf der Mitte der Traverse 8 ist diese über ein Gewinde mit einem Druckstempel verbunden, der sich gegen den zuspannseitigen Bremsbelag abstützt, und diesen so gegen die Bremsscheibe 2 beaufschlagen kann.

Der schwenkbare Bremshebel 10 ist gabelförmig gestaltet und besteht aus einem Hebelarm 14 und einer auf zwei Längsabschnitte aufgeteilten Zuspannwelle 15. Die Zuspannwelle 15 ist einerseits über die Stützrollen 20 gegenüber der Sattelrückwand 18 abgestützt, welche den Hohlraum 7 bremsscheibenabgewandt verschließt. Als Bestandteil dieser Abstützung ist zwischen jedem der zwei Längsabschnitte der Zuspannwelle 15 und einer innen an der Sattelrückwand 18 fest angeformten Schale 21 jeweils eine im Fall eines Verschleißes austauschbare Lagerschale 19 angeordnet. An der Lagerschale 19, die ebenso wie die Schale 21 als eine teilzylindrische Rinne gestaltet ist, stützt sich die jeweilige Stützrolle 20 drehbeweglich ab. Dazu ist die Stützrolle 20 über den überwiegenden Teil ihres Umfangs zylindrisch mit einem Radius, der gleich ist dem Innenradius der Lagerschale 19.

In die andere Richtung, also in Zuspannrichtung Z, ist die Zuspannwelle 15 über ein weiteres Schwenklager 17 schwenkbar gegen das Druckstück 8 abgestützt. Hierzu weist das Druckstück 8 einen Abstützbereich in Gestalt einer Halbschale auf. Das weitere Schwenklager 17 ist hier als Wälzlager ausgebildet.

Zum Erzielen einer hohen Zuspannkraft ist die Zuspannwelle 15 exzentrisch gelagert. Denn das gegen den Bremssattel abgestützte, durch die Achse Ader Stützrollen 20 definierte Schwenklager ist in der Höhe versetzt im Vergleich zu der Schwenkachse des zwischen der Zuspannwelle 15 und dem Druckstück 8 angeordneten Schwenklagers 17. Bei einem Verdrehen der exzentrisch konturierten Zuspannwelle 15 kommt es daher in Zuspannrichtung Z zu einer Vorwärtsbewegung des Druckstücks 8, wodurch die Bremse zugespannt wird und Bremskraft ausübt.

Dem Verdrehen der Zuspannwelle 15 dient der daran einstückig ausgebildete Hebelarm 14. Dieser ist nahe seines freien Endes mit einem Abstützort versehen, gegen den das Kraftglied der Scheibenbremse arbeitet. Bei druckluftbetätigten Scheibenbremsen ist dieses Kraftglied ein pneumatischer Bremszylinder, welcher durch das Druckluftsystem des Fahrzeugs mit Druckluft versorgt wird.

Der Bremshebel 10 ist insgesamt gabelförmig, da er sich, ausgehend von dem auf der Schwenkmittellinie angeordneten Hebelarm 14, in zwei Schenkel verzweigt. An dem ersten Schenkel befindet sich der erste Längsabschnitt, und an dem zweiten Schenkel der zweite Längsabschnitt der Zuspannwelle 15. Zwischen diesen beiden Längsabschnitten weist der Bremshebel 10 einen Freiraum auf. Dieser sowie ferner das mit einer Gewindebohrung versehene Zentrum des Druckstücks 8 bieten ausreichend Platz für eine Nachstelleinrichtung. Diese ist dazu ausgebildet, den im Laufe der Zeit auftretenden Bremsverschleiß zu kompensieren und das Lüftspiel der Bremse zu korrigieren. Bestandteile der Nachstelleinrichtung sind u. a. ein Antriebselement, ein das Lüftspiel der Bremse verringerndes Abtriebselement, eine Einwegekupplung sowie ein Überlastglied. Das Abtriebselement der Nachstelleinrichtung kann eine Spindel sein. Diese ist mit einem Außengewinde versehen, welches in die Gewindebohrung im Zentrum des Druckstücks 8 eingeschraubt ist. Die meisten Einzelteile der Nachstelleinrichtung sind auf einer Nachstellachse angeordnet. Die Nachstellachse befindet sich auf der Zuspannachse Z und erstreckt sich zugleich senkrecht zu jener Ebene, in der sich die Bremsscheibe 2 erstreckt. Da die Zuspannwelle 15 aufgeteilt ist auf zwei Längsabschnitte, sind an dem Bremshebel 10 zwei räumlich getrennte, rinnenförmige Schalen 22 für die Abstützung je einer der Stützrollen 20 ausgebildet. Ferner sind auch die Lagerschalen 19 zweifach vorhanden.

Die eine Schale 22 mit ihrer Stützrolle 20 befindet sich auf einer Seite, und die andere Schale 22 mit ihrer Stützrolle 20 befindet sich auf der anderen Seite jener Ebene, in welcher der Hebelarm 14 des Bremshebels 10 seine Schwenkbewegung ausführt.

Zwischen den beiden anderen, also den an der Sattelrückwand 18 ausgebildeten Schalen 21 und vorzugsweise zugleich auf der Nachstellachse der Nachstelleinrichtung befindet sich in der Sattelrückwand 18 eine Öffnung 25. Diese bietet bei betriebsfertig montierter Bremse Platz für ein Rückstellelement einer Rücksteileinrichtung. Denn sind die Bremsbeläge der Scheibenbremse verschlissen, müssen sie ausgetauscht werden. Anschließend muss die Nachstelleinrichtung in ihre Ausgangsstellung zurückgestellt werden, was mittels der erwähnten Rücksteileinrichtung erfolgt. Das Rückstellelement dieser Rücksteileinrichtung befindet sich in der Öffnung 25 der Sattelrückwand 18 und ist mit Schlüsselflächen versehen, an die sich zum Rücksteilen der Bremse ein entsprechendes Werkzeug ansetzen lässt.

Die zwei Schalen 21 der Sattelrückwand 18 sind zwecks Anlage der Lagerschalen 19, welche bei Verschleiß austauschbar sind, jeweils als eine teilzylindrische Rinne gestaltet. Dies vereinfacht die Herstellbarkeit der Schalen 21, zumal die Schalen 21 zueinander fluchten.

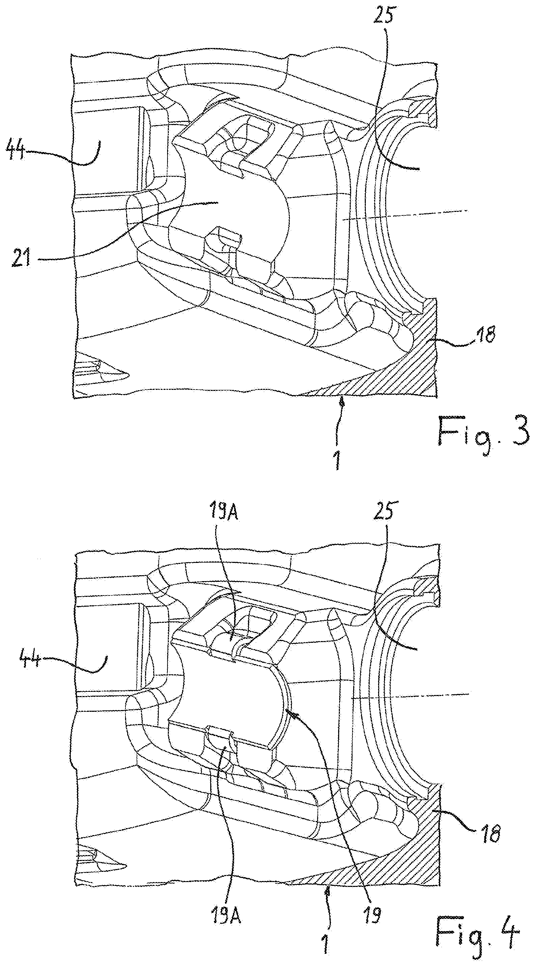

Gemäß Fig. 4 ist, aus herstellungstechnischen Gründen, jede Schale 21 an einem an der Sattelrückwand 18 innen angegossenen Plateau ausgebildet. Jede Schale 21 ist gemäß Fig. 3 bearbeitet, wobei sich eine bearbeitete, rinnenförmige Fläche von H-Form ergibt. Denn diese Fläche umfasst zwei breitere Stützflächenabschnitte und einen dazwischen angeordneten, schmaleren Mittelabschnitt. Der schmalere Mittelabschnitt ist bedingt durch zwei Einschnitte, mit denen das Plateau aufgrund des Gießprozesses versehen ist. In jeden Einschnitt ragt eine flügelförmige Lasche 19A der Lagerschale 19. Die Außenseite der Lagerschale19 erstreckt sich weiter in Umfangsrichtung, als der schmale Mittelabschnitt der Schale 21. Auf diese Weise ist es der Lagerschale 19 möglich, in Umfangsrichtung ein wenig auf der Schale 21 zu wandern. Diese Bewegungsmöglichkeit ist allerdings in beide Umfangsrichtungen begrenzt. Jede Lagerschale 19 besteht vorzugsweise aus einem ursprünglich flachen, durch Stanzen und Verformen hergestellten Metallblech mit einer Gleitlagerbeschichtung. Die teilzylindrisch gewölbte Außenseite liegt flächig gegen die Schale 21 an. An der teilzylindrischen Innenseite der Lagerschale 19 liegt die Stützrolle 20 mit ihrer zylindrischen Mantelfläche 20A an, so dass die Stützrolle 20 frei drehbar um ihre Rollenachse A in der Lagerschale 19 abgestützt ist.

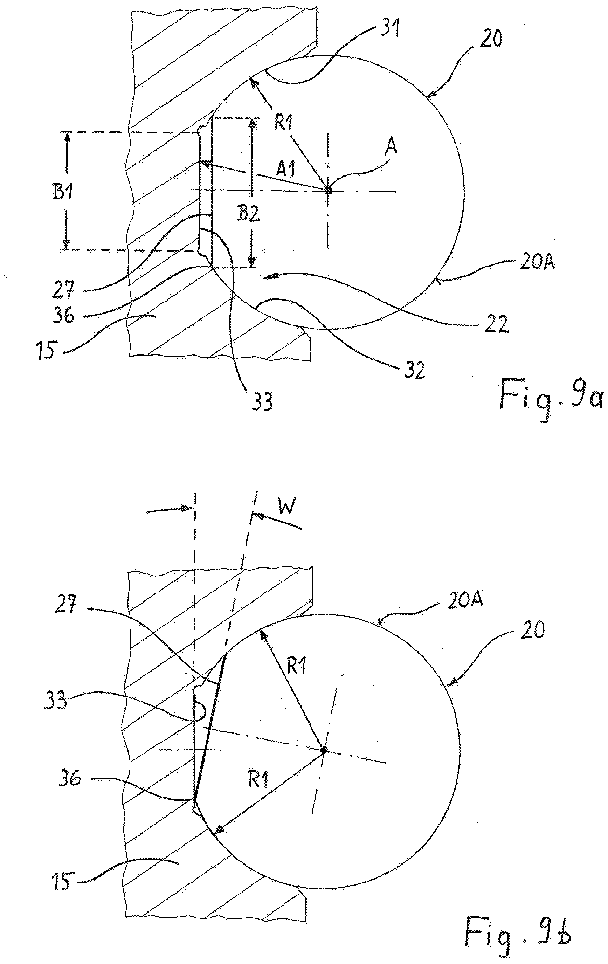

Hingegen ist, wie nachfolgend anhand der Figuren 9a, 9b erläutert wird, die Stützrolle 20 gegenüber ihrer anderen Schale, also gegenüber der direkt an der Zuspannwelle 15 ausgebildeten Schale 22, nicht frei drehbar. Vielmehr ist hier eine Drehbeweglichkeit entweder nicht vorhanden oder zumindest stark reduziert, indem die Stützrolle 20 in Bezug auf die Schale 22 drehfest oder begrenzt drehbeweglich ausgebildet ist. Erreicht wird dies durch eine Asymmetrie in Bezug auf die Rollenachse A. Diese Asymmetrie besteht in einer parallel zur Rollenachse A sich erstreckenden Abflachung 27 der im Übrigen zylindrischen Mantelfläche 20A. Diese Abflachung 27 erstreckt sich über dieselbe axiale Länge wie die Mantelfläche 20A. Die Abflachung 27 erstreckt sich in Umfangsrichtung über einen Winkel, der weniger als 80 ° beträgt, wohingegen der übrige Umfang zylindrisch ist.

Auch die Fläche der Schale 22, an der die Stützrolle unmittelbar anliegt, ist nicht exakt teilzylindrisch und damit ebenfalls asymmetrisch in Bezug auf die Achse A. Vielmehr setzt sich die Schale 22 in Umfangsrichtung zusammen aus zwei teilkreisförmig bzw. teilzylindrisch gebogenen Segmenten 31, 32 von gleichem Radius R1 und gleichem Bezugspunkt dieser Radien, und aus einer am Grund der Schale 22 zwischen den Segmenten 31, 32 angeordneten Abflachung 33. Die Abflachung 33 führt zu der Asymmetrie und erstreckt sich parallel zu der Rollenachse A. Die Abflachung 33 ragt im Vergleich zu dem Verlauf der Segmente 31, 32 nach radial innen, indem der radial gemessene Abstand A1 zwischen der Rollenachse A und der Abflachung 33 zumindest bereichsweise kleiner ist, als der Radius R1 der Schalensegmente 31, 32. Um die Verdrehbarkeit der Stützrolle 20 gegenüber der Schale 22 eng zu begrenzen, ist die Breite B1 der Abflachung 33 in der Schale 22 geringer und vorzugsweise 10% bis 30% geringer als die Breite B2 der der Abflachung 33 mit geringem radialen Abstand gegenüberliegenden Abflachung 27 an der Stützrolle 20. Fig. 9b gibt die Situation wieder, in der die im Übergang zwischen der zylindrischen Mantelfläche 20A und der Abflachung 27 vorhandene Kante 36 gegen die Abflachung 33 am Grund der Schale 22 stößt. Ab Erreichen dieser Drehlage ist der Stützrolle 20 keine weitere Drehung relativ zu der Schale 22 mehr möglich. Aufgrund der Abflachungen 27, 33 beträgt der maximal mögliche Drehwinkel in beide Drehrichtungen jeweils 6°.

Der Radius R1 der Schalensegmente 31, 32 ist geringfügig größer und jedenfalls nicht kleiner als der Radius des zylindrischen Teils der Mantelfläche 20A. Die Stützrolle 20 kann daher, um bei der Oberflächenbearbeitung der Teile eine zu hohe und damit teure Fertigungspräzision zu vermeiden, etwas radiales Spiel in der Schale 22 haben. Wegen des Vorhandenseins der einander gegenüberliegenden Einsenkungen 27, 33 wird trotzdem eine gute Anlage der Stützrolle 20 in der Schale 22 erreicht.

Die Stützrolle 20 wird so geschliffen, dass die Riefen auf der zylindrischen Mantelfläche 20A der Stützrolle in Umfangsrichtung verlaufen. Für einen geringen Verschleiß an den Oberflächen kann von Vorteil sein, wenn die Segmente 31, 32 mit einem um die Achse A drehenden Schleif-, Fräs- oder Bohrwerkzeug gefestigt werden, wobei die dabei erzeugten Riefen in Umfangsrichtung verlaufen.

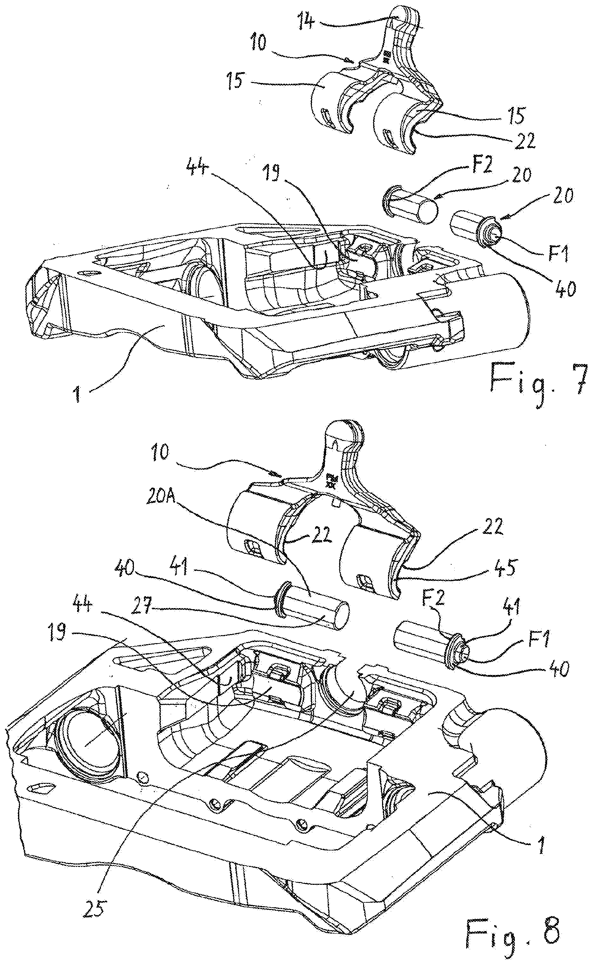

In den Fig. 7 und 8 sind, noch vor der endgültigen Montage, die beiden Stützrollen 20 und der Bremshebel 10 wiedergegeben. Jede Stützrolle 20 weist in ihrer Längsrichtung drei Abschnitte auf, nämlich erstens den eigentlichen Stützabschnitt mit der Mantelfläche 20A, zweitens einen daran anschließenden Bund 40 sowie drittens einen an den Bund 40 anschließenden, das Ende der Stützrolle 20 bildenden Zapfenabschnitt 41. Der Bund 40 und das Ende der Stützrolle 20 sind so ausgebildet, dass die Stützrolle 20 in Achsrichtung A mit einer ersten Fläche F1 gegen den Bremssattel 1, und mit einer zweiten Fläche F2 gegen den Bremshebel 10 anliegt.

Die zweite Fläche F2 ist entgegengesetzt zu der ersten Fläche F1 ausgerichtet. Außerdem ist die zweite Fläche F2 in Achsrichtung A versetzt zu der ersten Fläche F1 angeordnet. Die erste Fläche F1 ist die freie Stirnfläche des Zapfens 41. Diese ist flach gestaltet und sie liegt mit allenfalls geringem Spiel einer unmittelbar am Bremssattel 1 ausgebildeten Ausrichtfläche 44 gegenüber. Die beiden Ausrichtflächen 44 sind einander zugewandte Seitenflächen innen am Bremssattel 1, deren Flächennormalen mit der Achse Ader Stützrollen zusammenfallen. Beide Ausrichtflächen 44 sind plan bearbeitet, z. B. durch Schleifen oder Fräsen.

Wegen des beschränkten Platzes im Inneren des Bremssattels weist der Zapfen 41 einen geringeren Durchmesser auf als die Stützrolle 20 auf ihrer in den Schalen 21, 22 gelagerten Mantelfläche 20A. Der zwischen der Mantelfläche 20A und dem Zapfen 41 angeordnete Bund 40 erstreckt sich radial über die zylindrische Mantelfläche 20A der Stützrolle hinaus. Auf diese Weise bildet eine Seite des Bundes 40 die zweite Ausrichtfläche F2. Diese Fläche F2 liegt in Rollenlängsrichtung einer direkt an dem Bremshebel 10 ausgebildeten Ausrichtfläche 45 mit allenfalls geringem Spiel gegenüber. Die Flächen F2 der beiden Stützrollen 20 sind einander zugewandt.

An jeder Seite der Zuspannwelle 15 befindet sich jeweils eine der Ausrichtflächen 45. Jede Ausrichtfläche 45 weist die Gestalt eines Ringsegments auf, welches flach bzw. plan bearbeitet sein kann. Die Bezugsachse des Ringsegments fällt, was bei der Fertigung der Schale 22 günstig ist, mit der Rollenachse Ader Stützrolle zusammen.

Die zwei Stützrollen 20 sind also nicht nur Abstützmittel bei der Übertragung der Bremszuspannkräfte, sondern sie sind außerdem seitliche Ausrichtmittel, also Ausrichtmittel quer zur Zuspannrichtung Z. Denn jede Stützrolle 20 liegt mit der Fläche F1 gegen die Ausrichtfläche 44 des Bremssattels 1 an, so dass die Stützrolle 20 gegenüber dem Bremssattel seitlich ausgerichtet bzw. zentriert ist. Zugleich liegt die zweite Fläche F2, welche an dem radial erweiterten Bund 40 jeder Stützrolle angeordnet ist, gegen die Ausrichtfläche 45 an der jeweiligen Seite des Bremshebels 10 an. Im Zusammenspiel wird also die seitliche Ausrichtung bzw. Zentrierung des Bremshebels 10 relativ zu dem Gehäuse des Bremssattels 1 erzielt. Dabei übernimmt die erste Stützrolle 20 die Ausrichtung des Bremshebels 10 in die eine Querrichtung, und die zweite Stützrolle 20 die Ausrichtung des Bremshebels 10 in die andere, also entgegengesetzte Querrichtung. Es sind also keine zusätzlichen Elemente oder Bauteile erforderlich, um den Bremshebel 10 quer zur Zuspannrichtung Z in dem Bremssattel 1 zu zentrieren. Gleichzeitig verhindert der Bund 40, dass sich die jeweilige Stützrolle 20 in Richtung auf den zentral liegenden Freiraum bewegt, der sich zwischen den beiden Längsabschnitten der Zuspannwelle 15 befindet. Denn in diesem Freiraum befinden sich Bauteile der Zuspannvorrichtung und / oder der Nachstelleinrichtung, mit denen keine Kollision erfolgen darf.

Die Fläche F2 liegt nicht über den gesamten Umfang, sondern nur über ein Umfangsegment gegen den Bremshebel 10 an. Daher ist auch nicht erforderlich, dass sich der Bund über den gesamten Umfang erstreckt. Vielmehr erstreckt sich, wie die Figuren 7 und 8 erkennen lassen, der Bund 40 nur über einen Teilumfang der Stützrolle 20, wohingegen auf dem übrigen Umfang ein Bund nicht oder nur in einer radial reduzierten Höhe vorhanden ist. Die Stützrollen 20 weisen auf jenem Teilumfang, auf dem sich der Bund 40 mit der Fläche F2 befindet, die beschriebene Asymmetrie auf, also die Einsenkung bzw. Abflachung 27. Dies sichert die konkrete Drehlage der Stützrolle 20 in der Schale 22 und hat bauliche Vorteile. Denn in den zwei entsprechenden Eckenbereichen des Bremssattels 1 ist, wie z.B. die Figuren 3 und 4 erkennen lassen, sehr wenig Platz. Ein den gesamten Umfang der Stützrollen 20 umgebender Bund 40 würde Gefahr laufen, mit Flächen oder Absätzen innen am Bremssattel 1 zu kollidieren.

## Patentansprüche

1. Scheibenbremse mit einem Bremssattel (1) und einer darin angeordneten Zuspannvorrichtung für die Kraftbeaufschlagung der Bremsbeläge der Scheibenbremse, wobei Bestandteil der Zuspannvorrichtung ein durch ein Kraftglied und vorzugsweise einen Druckluftzylinder betätigbarer Bremshebel (10) ist, der sich zusammensetzt aus einem Hebelarm (14), gegen den das Kraftglied abgestützt ist, und einer Zuspannwelle (15), die einerseits gegen ein in Richtung zu den Bremsbelägen arbeitendes Druckstück (8), und die andererseits von innen gegen den Bremssattel abgestützt ist, indem der Bremssattel (1) und die Zuspannwelle (15) einander zugewandt jeweils als Schalen (21,22) ausgebildet sind, in denen eine Stützrolle (20) mit quer zu der Zuspannrichtung (Z) verlaufender Rollenachse (A) gelagert ist, wobei die Stützrolle (20) mit ihrer Mantelfläche (20A) unmittelbar in einer der beiden Schalen (21, 22) abgestützt ist und in Bezug auf diese Schale drehfest oder begrenzt drehbeweglich ausgebildet ist, **dadurch gekennzeichnet, dass** die Stützrolle (20) für ihre Drehfestigkeit bzw. Drehbegrenzung eine Asymmetrie in Bezug auf die Rollenachse (A) aufweist.

2. Scheibenbremse nach Anspruch 1, **dadurch gekennzeichnet, dass** die Stützrolle (20) in Bezug auf die an der Zuspannwelle ausgebildete Schale (22) drehfest oder begrenzt drehbeweglich ausgebildet ist.

3. Scheibenbremse nach Anspruch 2, **dadurch gekennzeichnet, dass** die Asymmetrie in einer sich parallel zur Rollenachse (A) erstreckenden Einsenkung (27) auf der im Übrigen zylindrischen Mantelfläche (20A) besteht.

4. Scheibenbremse nach Anspruch 3, **dadurch gekennzeichnet, dass** sich die Einsenkung (27) über dieselbe Länge wie die Mantelfläche (20A) erstreckt.

5. Scheibenbremse nach Anspruch 4 oder 5, **dadurch gekennzeichnet, dass** die Einsenkung (27) als Abflachung gestaltet ist.

6. Scheibenbremse nach Anspruch 3, 4 oder 5, **dadurch gekennzeichnet, dass** sich die Schale (22) zusammensetzt aus zwei teilkreisförmig gebogenen Segmenten von gleichem Radius (R1) und einer zwischen den Segmenten angeordneten, sich parallel zur Rollenachse (A) erstreckenden Abflachung (33), welche gegenüber dem Radius (R1) der Segmente (31, 32) nach radial innen vorsteht.

7. Scheibenbremse nach Anspruch 6, **dadurch gekennzeichnet, dass** die Abflachung (33) als Kanal gestaltet ist.

8. Scheibenbremse nach Anspruch 6 oder 7, **dadurch gekennzeichnet, dass** die Breite (B1) der Abflachung (33) geringer ist als die Breite (B2) der Einsenkung (27) auf der Mantelfläche (20A) der Stützrolle (20), vorzugsweise 10% bis 30% geringer.

9. Scheibenbremse nach einem der Ansprüche 6 - 8, **dadurch gekennzeichnet, dass** der Radius der Stützrolle (20) maximal gleich dem Radius (R1) der Segmente ist.

10. Stützrolle (20) für die Zuspannvorrichtung einer Scheibenbremse, mit einer für eine Abstützung der Stützrolle zwischen zwei Schalen ausgebildeten Mantelfläche (20A) und einem am einen Ende der Mantelfläche (20A) angeordneten Bund (40), der sich radial über die Mantelfläche (20A) hinaus erstreckt, wobei die Stützrolle (20) eine Asymmetrie in Bezug auf ihre Rollenachse (A) aufweist, und die Asymmetrie in einer sich parallel zur Rollenachse (A) erstreckenden Einsenkung (27) auf der im Übrigen zylindrischen Mantelfläche (20A) besteht.

11. Stützrolle nach Anspruch 10, **dadurch gekennzeichnet, dass** diese im Anschluss an den Bund (40) mit einem Zapfen (41) versehen ist, der einen geringeren Durchmesser als die Mantelfläche (20A) aufweist.

12. Stützrolle nach Anspruch 10 oder 11, **dadurch gekennzeichnet, dass** sich der Bund (40) nur über einen Teilumfang der Mantelfläche (20A) erstreckt, und dass auf dem übrigen Umfang ein Bund nicht oder nur in einer radial reduzierten Höhe vorhanden ist.

13. Stützrolle nach Anspruch 12, **dadurch gekennzeichnet, dass** die Mantelfläche (20A) auf jenem Teilumfang, über den sich der Bund (40) erstreckt, die Asymmetrie aufweist.
